# EUROPEAN PATENT SPECIFICATION

(11) **EP 3 856 500 B1**
(45) Date of publication and mention of the grant of the patent: **11.09.2024**
(21) Application number: 19787079.3
(22) Date of filing: 18.09.2019
(51) Int. Cl.: B29C 70/46, B29C 70/44

(54) **PROCESS AND APPARATUS FOR PRODUCING AN ARTICLE MADE OF COMPOSITE MATERIAL**
VERFAHREN UND VORRICHTUNG ZUR HERSTELLUNG EINES AUS VERBUNDMATERIAL GEFERTIGTEN ARTIKELS
PROCÉDÉ ET APPAREIL DE PRODUCTION D'UN ARTICLE EN MATÉRIAU COMPOSITE

(30) Priority: 24.09.2018 IT 201800008856
(43) Date of publication of application: 04.08.2021
(73) Proprietor: Novation Tech S.P.A., 31044 Montebelluna (IT)
(72) Inventor: GABRIELE, Tiveron, 31044 Montebelluna (TV) (IT)
(74) Representative: Susanetto, Carlo
(86) International application number: PCT/IB2019/057852
(87) International publication number: WO 2020/065448

(56) References cited:
- EP-A1- 2 008 797
- EP-A1- 2 481 558
- GB-A- 2 519 636
- JP-A- S6 147 240
- JP-A- S60 135 230

## Description

### Technical field

The present invention relates to a process for producing an article made of composite material, in particular an article made by means of moulding polymeric material reinforced with fibres. It also relates to an apparatus specifically designed and configured to operate in accordance with this process.

### Technological background

Composite materials are being used ever more extensively in many sectors, due to their excellent characteristics of mechanical strength and chemical resistance, combined with a particularly low specific weight. These characteristics allow the composite materials to be presented as excellent and often advantageous alternatives compared with other conventional structural materials, such as metals for example.

Amongst the most commonly used composite materials, reference can be made to those formed by reinforcement fibres embedded in a polymeric matrix, wherein the final characteristics of the material are determined by the type of fibres and the polymer used. The fibres can be long or short, continuous or discontinuous, and can be of organic or inorganic origin, such as, for example, glass fibres, carbon fibres or aramid fibres. The polymers used can be both thermoplastic and thermosetting, but typically they are thermosetting, such as, for example, epoxide resins.

The processes for production of articles made of composite materials based on fibres embedded in a thermosetting polymeric matrix in general include a phase of preparing a semi-finished product, which has the form of the final desired article, and a subsequent phase of hardening the semi-finished product, which leads to the cross-linking of the thermosetting polymeric matrix.

The step of preparing the semi-finished product is carried out starting from layers of composite material formed by fibres impregnated with a non-cross-linked polymer. These layers are known as "pre-impregnated" or "pre-preg" and are deposited manually on one another, optionally after having been cut out, on a mould unit which has the form of the article desired.

In this step of depositing the pre-impregnated layers, elements of other materials can advantageously be inserted in the semi-finished product, such as, for example, inserts made of metal or lightening material that are designed to be incorporated in the final article.

Once the semi-finished product has been prepared, it is subjected to temperature and pressure conditions which bring about the cross-linking of the polymer, so as to harden the semi-finished product and make its shape definitive.

In a first known production process, the semi-finished product is put into an autoclave, enclosed inside a bag which is connected to a vacuum pump.

The autoclave is closed, and the pressure and temperature inside it are brought to values suitable for causing the cross-linking of the polymer. At the same time, the inside of the bag is depressurised, so as to aspirate air and any gases which have developed in the cross-linking process.

This process makes it possible to obtain articles of optimum quality, which in particular have optimum characteristics of mechanical strength, and are free from surface defects.

However, this process requires very lengthy dwell times in the autoclave, typically of approximately a few hours, thus substantially increasing the production times and costs. This limits the use of this process to the production of articles which are reserved for relatively costly and niche markets.

In another known production process, the semi-finished product is placed in a heated press, where the pressure is exerted directly by a punch dropped directly onto the semi-finished product.

This second known process makes it possible to reduce the production times significantly, thus making more economically advantageous industrial production possible, which is suitable for more widely used articles.

However, this process has various disadvantages, including the poor surface quality and lower performance in terms of mechanical strength, which in some cases precludes the use thereof in highly technical fields, such as the aeronautical field for example.

In addition, this process is poorly suited to the production of articles made of composite material in which components of different materials are to be inserted, such as, for example, a honeycomb lightening structure, which components have a somewhat limited resistance to pressure.

It should be noted that, within the context of the present description and the appended claims, an element is made of "soft material" when it is easily deformable under the action of the forces and pressures to which it is subjected during the process according to the invention.

For example, if a first element made of soft material positioned above a second element is subjected to a certain pressure provided in the process according to the invention, it is deformed so as to adapt to the shape of the surface of the second element.

Document EP 2 008 797 A1 discloses a process according to the preamble of claim 1 and an apparatus according to the preamble of claim 10 for producing an article made of a composite material.

### Description of the invention

The problem addressed by the present invention is that of providing a process for producing articles made of composite material functionally designed to at least partly overcome the limits described above with reference to the cited prior art.

Within the context of this problem, an objective of the invention is to provide a process which does not require particularly complicated and costly equipment.

This problem is solved and this objective is achieved by the present invention by means of a process for producing articles made of composite material carried out in accordance with the following claims.

Thus, in a first aspect, the invention is directed to a process according to claim 1 for producing an article made of composite material, comprising the steps of:
- providing a semi-finished product comprising at least one layer of fibres embedded in a polymeric matrix which is not cross-linked;
- positioning the semi-finished product in a first unit of a mould;
- positioning a separator element above the semi-finished product, such that the separator element peripherally abuts the first unit of the mould, so as to define a first chamber between the separator element and the first unit of the mould, in which chamber the semi-finished product is contained.

The process then provides for closing the mould by means of a second unit of the mould that peripherally abuts the first unit of the mould or the separator element, so as to define a second chamber between the second unit and the separator element.

The first chamber is then depressurised and gas is introduced into the second chamber so as to push the separator element against the semi-finished product at a first predefined pressure.

A second pressure that is different from the first pressure is preferably exerted at least on one limited region of the semi-finished product by means of the second mould unit directly contacting the separator element.

The temperature inside the first chamber is therefore brought to a predefined value, so as to cross-link the polymeric matrix and obtain the article. The separator element is distinct from and independent of said first unit and said second unit;

According to a second aspect, the present invention is directed to an apparatus according to claim 10 for producing an article made of composite material.

The apparatus comprises:
- a first unit of a mould that receives a semi-finished product of the article comprising at least one layer of fibres embedded in a polymeric matrix which is not cross-linked;
- a second unit of a mould that can be moved from and towards the first unit, in order to close the semi-finished product inside a mould where the polymeric matrix is cross-linked;
- a separator element that can be positioned above the semi-finished product in a position arranged between the first unit and the second unit, in order to define a first chamber therebetween that contains the semi-finished product and a second chamber defined between the separator element and the second unit, wherein the separator element is distinct from and independent of said first unit and said second unit;
- a depressurisation device for de-pressurising the first chamber;
- a pressurisation device for pressurising the second chamber to a first pressure;
- a heating device for heating the first and/or the second mould unit; and
- a control unit for operating the apparatus according to the process set out in the first aspect.

When the second unit of the mould is closed on the first mould unit, it comes into contact with the separator element and pushes on the semi-finished product at a pressure different from the first pressure maintained in the second chamber by the pressurisation device.

As a result of these features, the process according to the present invention and the corresponding apparatus make it possible to obtain an article made of composite material that has mechanical characteristics which are similar to, or even better than, those obtained using the process of cross-linking in an autoclave, but in a much shorter time, i.e. approximately 50-60 minutes compared with the approximately 150-200 minutes necessary for the process of cross-linking in an autoclave.

This advantage results in a direct reduction of the production costs, and in a substantial increase in the production capacity.

The provision of a soft separator element to be positioned above the semi-finished product makes it possible to define a first chamber which has a volume which is greatly reduced, and substantially equal to the volume of the semi-finished product. In fact, the action of the pressure exerted in the second chamber makes the separator element adhere to the semi-finished product on the side opposite the first mould unit. In addition, the pressure is exerted by the separator element contacting the entire semi-finished product substantially uniformly.

The second unit of the mould is also preferably shaped such that the second chamber which is formed between the unit and the separator element has a reduced volume.

As a result of the particularly reduced volumes of the first and second chambers (and of the masses which define them) compared with the volume (and the mass) of an autoclave, it is been found that the process according to the invention permits faster and more efficient control both of the development of the pressure and of the development of the temperature.

In addition, as a result of the feature whereby, in some limited regions, the second mould unit pushes on the separator unit and thus on the semi-finished product beneath, so as to impart a second pressure thereon which is different from the first pressure exerted on the separator element by the gas introduced into the second chamber, the semi-finished product can advantageously be subjected to different pressures at different regions thereof. By this means, the process becomes more flexible, and can be better adapted to the different functional and structural requirements of the article being produced.

In at least one of said aspects, the present invention can also have at least one of the preferred features described hereinafter.

The semi-finished product is preferably formed by superimposed layers of composite material based on pre-impregnated fibres in a polymeric matrix that is not cross-linked.

The fibres are preferably based on carbon or glass, and the matrix is based on epoxide resin.

The semi-finished product preferably comprises layers of pre-impregnated material based on both glass fibre and carbon fibre.

The semi-finished product preferably comprises a lightening element formed by a honeycomb structure, which element is inserted between the layers of pre-impregnated composite material.

By this means, it is possible to lighten the final article and reduce the production costs thereof.

The semi-finished product preferably comprises at least one reinforcement element, formed for example by a metallic component, which is inserted between the layers of pre-impregnated composite material.

By this means, it is possible to reinforce specific portions of the article and prepare the article in order to be optionally coupled to other articles by means of screws.

According to a preferred embodiment, the article made of composite material is a component of a seat for aeronautical use or automobile use, such as, for example, the body of a backrest or of a seat.

The separator element is preferably made of soft material, more preferably of silicon-based elastomer material which has such dimensions as to cover the entire semi-finished product and peripherally project therefrom so as to abut the first unit of the mould.

The separator element preferably has a thickness of between approximately 5 mm and approximately 70 mm.

The separator element can be made of other materials, provided that they are sufficiently flexible and resistant to the temperatures used in the process, and compatible with the polymeric material of which the semi-finished product is made.

The separator element is distinct from and independent of the first and the second mould units.

The surface of the separator element that is designed to contact the semi-finished product is preferably shaped so as to match the surface of the semi-finished product.

The first mould unit preferably also has a mould surface against which the semi-finished product abuts and which is shaped so as to match the form of the semi-finished product at its surface of contact with the first mould unit.

A plurality of channels are preferably made on the surface of the first mould unit, which channels permit efficient discharge of air and gas from the side of the semi-finished product abutting the first mould unit when the first chamber is depressurised.

These channels are preferably provided on the surface of the first mould unit, and have a very shallow depth, of approximately a few tenths of a millimetre. These channels preferably extend as far as the edge of the first mould unit where they are connected to a vacuum pump.

A layer of fabric is preferably arranged between the separator element and the semi-finished product, which layer, by acting as an aerator, assists the discharge of air and gas from the side of the semi-finished product in contact with the separator element when the first chamber is depressurised.

The first chamber is preferably brought to an absolute pressure lower than approximately 0.2 bar (or, in other words, to a negative pressure of at least 0.8 bar), preferably between approximately 0.1 and 0.2 bar absolute.

The first chamber is preferably closed.

The apparatus preferably comprises a heating device, which is designed to bring the temperature inside the first chamber to a predefined value.

More preferably, the heating device comprises a plurality of ducts arranged in the first mould unit below the surface which is in contact with the semi-finished product, through which ducts a fluid is made to flow at a controlled temperature.

The second mould unit is preferably connected to a line for introducing gas, for example compressed air, which line is designed to introduce gas inside the second chamber at a first predefined pressure.

The second chamber is preferably brought to a first pressure of between approximately 3 and 6 bar, preferably between approximately 4 and 5 bar. The second chamber is preferably closed.

The second pressure is preferably between 8 and 15 bar, preferably between 10 and 12 bar.

This possibility is particularly advantageous, firstly when the semi-finished product has regions which cannot be subjected to excessively high pressures, for example portions of a semi-finished product comprising an insert made of lightening material, such as a honeycomb structure, and secondly when the semi-finished product has highly curved regions, such as grooves, corner regions or ribs, which require relatively high pressures in order to obtain an optimum surface finish quality.

### Brief description of the drawings

The features and advantages of the invention will become more apparent from the detailed description of a preferred embodiment thereof, illustrated by way of non-limiting example and with reference to the appended drawings, in which:

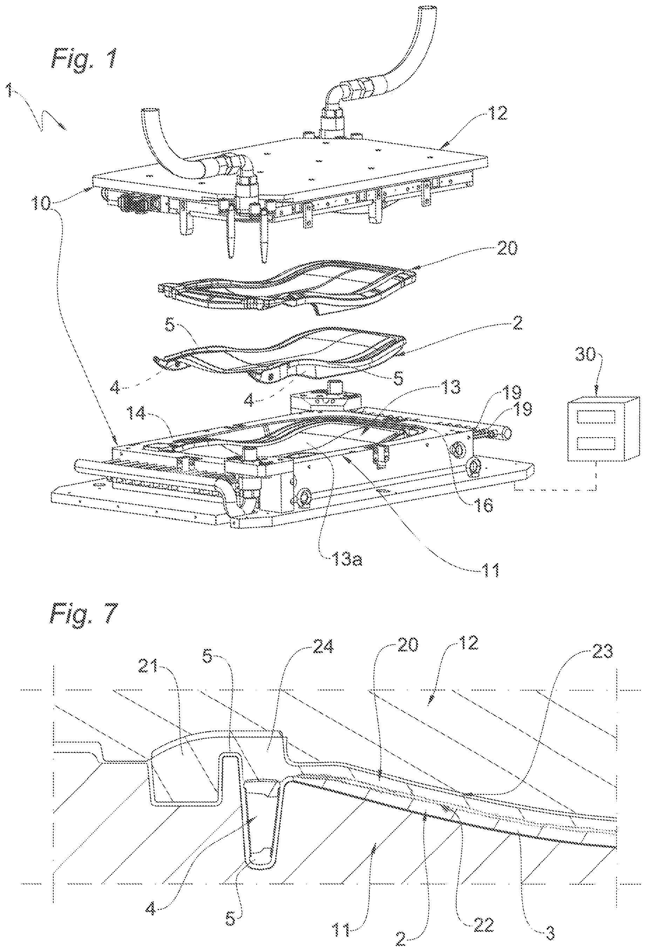

- Fig. 1 is a schematic perspective view of an apparatus for producing an article made of composite material produced according to the present invention;
- Fig. 2 to 6 are transverse cross-sectional views of the apparatus in Fig. 1, in successive phases of the process according to the invention;
- Fig. 7 is a view on an enlarged scale of a detail of Fig. 5.

### Preferred embodiment of the invention

In the figures, 1 indicates as a whole an apparatus for producing an article made of composite material that operates in accordance with the process of the present invention.

The article made of composite material can be any type of object, but in the preferred example described in detail here it is a component of a seat, in particular a backrest. The seat is designed to be used in the aeronautical sector.

The article is obtained from a semi-finished product 2, composed of a plurality of layers based on pre-impregnated fibres in a polymeric matrix having an epoxide base which is not cross-linked.

In particular, some pre-impregnated layers are layers based on glass fibres, and others are pre-impregnated layers based on carbon fibres, arranged on one another in an appropriate order.

The semi-finished product 2 also comprises a lightening element 3, formed by a honeycomb structure, which is inserted between the layers of pre-impregnated composite material, as well as a pair of reinforcement elements, formed by respective metal bars 4, which are inserted between the layers of pre-impregnated composite material, and which receive some screws for securing the seat. In particular, the lightening element 3 is placed at a median region 4 of the semi-finished product, which region is almost flat or has reduced curvature, whereas the metal bars 4 are arranged at the sides of the semi-finished product 2.

Regions 5 which are highly curved (i.e. having a reduced radius of curvature, in particular less than 5 mm, preferably less than 1.5 mm), which regions correspond for example to the seats for positioning the metal bars 4, are also defined on the semi-finished product 2.

The apparatus 1 comprises a mould 10, made of metal material, in turn comprising a first mould unit 11, known as the "matrix", and a second mould unit 12, known as the "punch", which can be moved by means of an oleodynamic movement system (which is in itself conventional, and is therefore not shown in the appended figures) from and towards the first mould unit 11, so as to close the semi-finished product 2 inside the mould 10.

The first mould unit 11 receives the semi-finished product 2 on a mould surface 13 thereof which faces upwards and is shaped in such a way as to match the form of the surface of the semi-finished product with which it comes into contact.

The mould surface 13 is surrounded by an edge 14, and a plurality of channels 13a pass through said surface, which channels have a depth of a few tenths of a millimetre, for example 0.2 mm, extending as far as the edge 14. The first mould unit 11 is also connected to a depressurisation device 15, comprising for example a vacuum pump and communicating with the channels 13a provided on the mould surface 13.

The apparatus 1 also comprises a separator element 20 which is designed to be positioned above the semi-finished product 2 once the semi-finished product has been deposited on the mould surface 13.

The separator element 20 is made of a silicon-based elastomeric material, and has dimensions so as to cover the entire semi-finished product 2 and peripherally project therefrom, so as to abut the first mould unit 11 at the edge 14 thereof.

A groove 16 is preferably made in the edge 14, which groove extends so as to surround the mould surface 13 and in which a corresponding edge 21 of the separator element 20 is received.

The separator element 20 has an average thickness of approximately 5 mm, whereas at its edge 21 it has a thickness which is increased by approximately 30 mm.

The separator element 20 is also shaped so as to match the shape of the semi-finished product 2 at the respective contact surfaces.

A layer of fabric 17 is preferably arranged between the separator element 20 and the semi-finished product 2, which layer acts as an aerator element in order to assist the passage of air or gas between the surfaces of the separator element 20 and the semi-finished product 2.

The separator element 20 is separate and distinct from the first and the second units 11 and 12, and is nevertheless designed to be arranged therebetween.

In fact, when the second mould unit 12 is closed on the first mould unit 11, it abuts the separator element 20 at least at the edge 21 thereof.

By this means, when the second mould unit 12 is closed on the first mould unit 11, the space between the two mould units 11 and 12 is subdivided by the separator element 20 into a first closed chamber 22, which is defined between the separator element and the first mould unit 11, and can contain the semi-finished product 2, and into a second closed chamber 23, which is defined between the separator element 20 and the second mould unit 12. When the second mould unit 12 is closed on the first mould unit 11, the separator element 20 is in general slightly spaced, for example by a distance of between 2 and 3 mm, from the second mould unit 12, with the exception of its edge 21 and, as explained in greater detail hereinafter, a first region 24 thereof, in which the second mould unit 12 is directly in contact with the separator element 20.

On the side opposite the second mould unit 12, the edge 21 of the separator element 20 is in contact with the first mould unit 11, whereas the first region 24 is in contact with the highly curved regions 5 of the semi-finished product 2.

In order to ensure the hermetic sealing of the mould 10 when the second mould unit 12 is closed on the first mould unit 11, a seal 12a is fitted on the perimeter edge of the second mould unit 12.

The second mould unit 12 is connected to a pressurisation device 18, which is designed to introduce a gas, typically air, inside the second chamber 23. As a result of the pressurisation device 18, the pressure inside the second chamber 23 can be brought to predefined values at a controlled speed.

In addition, the apparatus 1 comprises a device for heating the mould 10, which device is associated both with the first mould unit 11 and the second mould unit 12.

In particular, the heating device comprises a plurality of ducts 19 which pass through the first mould unit 11 below the mould surface 13, and along which a liquid is made to pass at a predefined and controlled temperature, for example water. In addition, the heating device comprises an electrical resistor which is associated with the second mould unit 12, in order to regulate the temperature thereof.

As a result of the heating device, the temperature inside the first chamber 22 can be brought to predefined values at a controlled speed, both in the heating phase and in the cooling phase.

The apparatus 1 also comprises a control unit 30 which is designed to control its various components according to the phases of the production process specified hereinafter.

First of all, the semi-finished product 2 is prepared by means of depositing and overlapping layers of fibres, which may also be of a different type such as carbon fibres and glass fibres, and which are pre-impregnated in epoxide resin which is not cross-linked.

The preparation of the semi-finished product includes inserting both the metal bars 4 and the lightening element 3 at a suitable position.

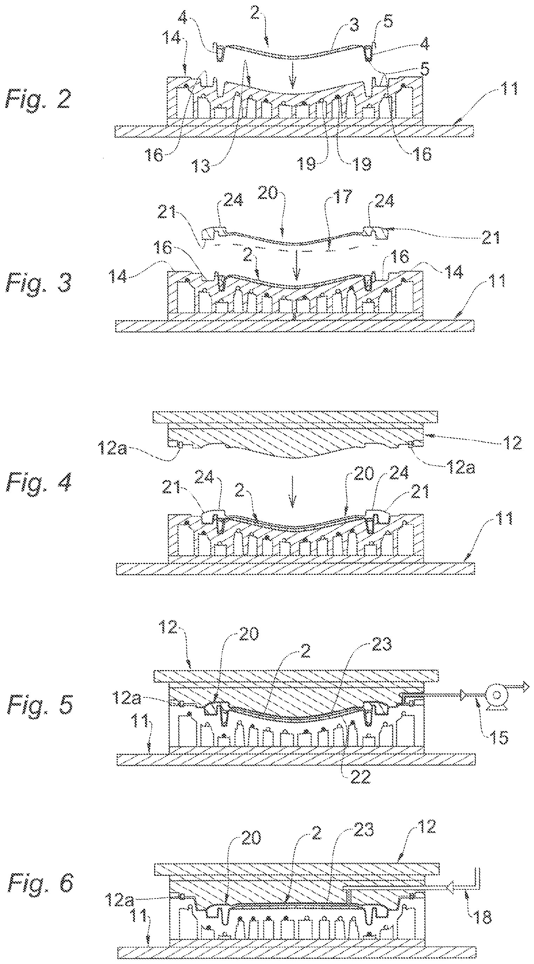

The semi-finished product 2 is then made to abut the mould surface 13 of the first mould unit 11 (Fig. 2).

The layer of fabric 17 and thus the separator element 20 is positioned above the semi-finished product 2, so as to position the edge 21 thereof in the groove 16 provided on the edge 14 of the first mould unit 11 (Fig. 3).

The mould is closed by lowering and clamping the second mould unit 12 on the first mould unit 11 (Fig. 4).

By this means, the first chamber 22 and the second chamber 23 are defined. The substantially hermetic closure of the two chambers is obtained by the pressure of the second mould unit 12 on the seal 12a and on the edge 21 of the separator element 20.

In addition, the second mould unit 12 also pushes directly on the highly curved region 5 of the semi-finished product 2, by means of the first region 24 of the separator element 20.

At this point, the depressurisation device 15 is actuated, such that any air and gas present in the first chamber 22 is discharged through the channels provided in the mould surface 13 and the layer of fabric 17 (Fig. 5). In particular, the first chamber 22 is brought to an absolute pressure value of approximately 0.2 bar, i.e. to a depressurisation value of approximately 0.8 bar.

Subsequently, the pressurisation device 18 is actuated, which device introduces air into the second chamber 23, at a controlled speed and until the inside of the second chamber 23 is brought to a first pressure at a value of approximately 5 bar (Fig. 6).

The separator element 20 is therefore pushed by the first pressure against the surface of the semi-finished product 2 and, since it is made of soft material, is deformed so as to adhere to the semi-finished product 2 and transmit the first pressure uniformly thereto.

The first pressure is such that it does not damage the lightening element 3. On the other hand, the regions 5 of the semi-finished product 2 are subjected to a second pressure exerted by the direct contact of the second mould unit 12 clamped on the first region 24 of the separator element 20. The second pressure is substantially independent from the first pressure, and is advantageously greater than the first pressure, at values of approximately 10-12 bar.

By this means, the highly curved regions 5 of the semi-finished product 2 can be subjected to a pressure which is sufficiently high to obtain optimum results of surface finish and resistance to delamination.

The mould 10 is then brought to the desired temperature in order to bring about the cross-linking of the epoxide polymeric matrix by means of actuating the heating device which is associated both with the first mould unit 11 and the second mould unit 12.

During this phase, the depressurisation device 15 is kept operating, so as to aspirate any gases developed by the cross-linking reaction, or any air which has infiltrated into the first chamber 22.

The mould 10 is maintained in the pressure and temperature conditions for the time necessary to complete the cross-linking of the polymeric matrix, after which the mould is cooled, for example by making cold water flow through the ducts 19 and switching off the electric heater associated with the second mould unit 12, and the mould is then opened in order to permit extraction of the hardened semi-finished product.

The process lasts for approximately 50-60 minutes, and makes it possible to obtain an article with optimum mechanical and surface finish characteristics, which are altogether comparable to (if not better than) those obtained by means of a process of cross-linking in an autoclave.

The present invention thus solves the problem described above with reference to the cited prior art.

## Claims

1. Process for producing an article made of a composite material, comprising:
- providing a semi-finished product (2) comprising at least one layer of fibres embedded in a polymeric matrix which is not cross-linked;
- positioning said semi-finished product in a first unit (11) of a mould (10);
- positioning a separator element (20) above said semi-finished product (2) such that said separator element peripherally abuts said first unit (11) of said mould so as to define a first chamber (22) between said separator element (20) and said first unit (11), in which chamber said semi-finished product is contained,
- closing said mould (10) by means of a second unit (12) of said mould that peripherally abuts said first unit (11) of said mould or said separator element so as to define a second chamber (23) between said second unit (12) and said separator element (20),
- depressurising said first chamber (22),
- introducing gas into said second chamber (23) so as to push said separator element (20) against said semi-finished product (2) at a first predefined pressure,
- bringing the temperature inside said first chamber (22) to a predefined value so as to cross-link said polymeric matrix and obtain said article,
wherein a second pressure that is different from said first pressure is exerted on at least one limited region (5) of said semi-finished product by means of said second unit (12) of said mould directly contacting said separator element (20) so as to subject different regions of said semi-finished product to differentiated pressures,
**characterised in that** said separator element (20) is distinct from and independent of said first unit (11) and said second unit (12).

2. Process according to claim 1, wherein said separator element (20) is made of a soft material, preferably a silicon-based material.

3. Process according to either claim 1 or claim 2, wherein said first chamber (22) and/or said second chamber (23) are closed.

4. Process according to any one of the preceding claims, wherein said second pressure is greater than said first pressure.

5. Process according to any one of the preceding claims, wherein said first pressure is between 4 and 5 bar.

6. Process according to any one of the preceding claims, wherein said second pressure is between 10 and 12 bar.

7. Process according to any one of the preceding claims, wherein said semi-finished product comprises a lightening element (3) having a honeycomb structure.

8. Process according to any one of the preceding claims, wherein said second pressure is exerted on a highly curved region (5) of said semi-finished product (2).

9. Process according to any one of the preceding claims, wherein said article is a seat portion for aeronautical or automotive use.

10. Apparatus (1) for producing an article made of a composite material, comprising:
- a first unit (11) of a mould (10) that is arranged to receive a semi-finished product (2) of said article comprising at least one layer of fibres embedded in a polymeric matrix which is not cross-linked,
- a second unit (12) of said mould that can be moved from and towards said first unit (11) in order to close said semi-finished product inside said mould where said polymeric matrix is cross-linked,
- a separator element (20) that can be positioned above said semi-finished product (2) in a position arranged between said first unit (11) and said second unit (12) in order to define a first closed chamber (22) therebetween that contains said semi-finished product and a second closed chamber defined between said separator element and said second unit,
- a depressurisation device for depressurising said first chamber,
- a pressurisation device for pressurising said second chamber to a first pressure,
- a heating device for heating said first and/or said second mould unit,
- a control unit for operating said apparatus according to any one of the preceding claims,
wherein, when said second unit (12) of said mould is closed on said first unit, it comes into contact with said separator element and pushes on said semi-finished product at a pressure different from said first pressure,
**characterised in that** said separator element (20) is distinct from and independent of said first unit (11) and said second unit (12).

## Patentansprüche

1. Verfahren zur Herstellung eines Gegenstandes aus einem Verbundwerkstoff, umfassend:
- Vorsehen eines Halbzeugs (2), das zumindest eine Schicht aus Fasern aufweist, die in eine nicht vernetzte Polymermatrix eingebettet sind;
- Positionieren des Halbzeugs in einer ersten Einheit (11) einer Form (10);
- Positionieren eines Trennelements (20) über dem Halbzeug (2), so dass das Trennelement am Umfang an der ersten Einheit (11) der Form anliegt, um eine erste Kammer (22) zwischen dem Trennelement (20) und der ersten Einheit (11) zu bilden, in der das Halbzeug enthalten ist,
- Schließen der Form (10) mittels einer zweiten Einheit (12) der Form, die am Umfang an der ersten Einheit (11) der Form oder am Trennelement anliegt, um eine zweite Kammer (23) zwischen der zweiten Einheit (12) und dem Trennelement (20) zu bilden,
- Druckentlasten der ersten Kammer (22),
- Einleiten von Gas in die zweite Kammer (23), um das Trennelement (20) mit einem ersten vorbestimmten Druck gegen das Halbzeug (2) zu drücken,
- Erhöhen der Temperatur in der ersten Kammer (22) auf einen vorbestimmten Wert, um die Polymermatrix zu vernetzen und den Gegenstand zu erhalten,
wobei ein zweiter Druck, der sich vom ersten Druck unterscheidet, auf zumindest einen begrenzten Bereich (5) des Halbzeugs mittels der zweiten Einheit (12) der Form aufgebracht wird, die das Trennelement (20) direkt berührt, um verschiedene Bereiche des Halbzeugs unterschiedlichen Drücken auszusetzen, **dadurch gekennzeichnet, dass** das Trennelement (20) von der ersten Einheit (11) und der zweiten Einheit (12) verschieden und unabhängig ist.

2. Verfahren nach Anspruch 1, wobei das Trennelement (20) aus einem weichen Material, vorzugsweise einem Material auf Siliziumbasis, hergestellt ist.

3. Verfahren nach Anspruch 1 oder Anspruch 2, wobei die erste Kammer (22) und/oder die zweite Kammer (23) geschlossen sind.

4. Verfahren nach einem der vorhergehenden Ansprüche, wobei der zweite Druck größer ist als der erste Druck.

5. Verfahren nach einem der vorhergehenden Ansprüche, wobei der erste Druck zwischen 4 und 5 bar liegt.

6. Verfahren nach einem der vorangehenden Ansprüche, wobei der zweite Druck zwischen 10 und 12 bar liegt.

7. Verfahren nach einem der vorangehenden Ansprüche, wobei das Halbzeug ein gewichtsreduziertes Element (3) mit einer Wabenstruktur aufweist.

8. Verfahren nach einem der vorangehenden Ansprüche, wobei der zweite Druck auf einen stark gekrümmten Bereich (5) des Halbzeugs (2) aufgebracht wird.

9. Verfahren nach einem der vorangehenden Ansprüche, wobei der Gegenstand ein Sitzteil für die Luftfahrt- oder Automobilverwendung ist.

10. Vorrichtung (1) zur Herstellung eines Gegenstandes aus einem Verbundwerkstoff, umfassend:
- eine erste Einheit (11) einer Form (10), die angeordnet ist, um ein Halbzeug (2) des Gegenstands aufzunehmen, das zumindest eine Schicht aus Fasern aufweist, die in eine nicht vernetzte Polymermatrix eingebettet sind,
- eine zweite Einheit (12) der Form, die von der ersten Einheit (11) weg und zu ihr hin bewegt werden kann, um das Halbzeug in der Form zu verschlie-ßen, in der die Polymermatrix vernetzt ist,
- ein Trennelement (20), das oberhalb des Halbzeugs (2) an einer Position positioniert werden kann, die zwischen der ersten Einheit (11) und der zweiten Einheit (12) angeordnet ist, um eine erste geschlossene Kammer (22) dazwischen zu bilden, die das Halbzeug enthält, und eine zweite geschlossene Kammer zu bilden, die zwischen dem Trennelement und der zweiten Einheit ausgebildet ist,
- eine Druckentlastungsvorrichtung zur Druckentlastung der ersten Kammer,
- eine Druckbeaufschlagungsvorrichtung zur Druckbeaufschlagung der zweiten Kammer mit einem ersten Druck,
- eine Heizvorrichtung zum Erhitzen der ersten und/oder zweiten Formeinheit,
- eine Steuereinheit zum Betreiben der Vorrichtung nach einem der vorhergehenden Ansprüche,
wobei, wenn die zweite Einheit (12) der Form an der ersten Einheit geschlossen wird, diese mit dem Trennelement in Kontakt kommt und auf das Halbzeug mit einem Druck drückt, der sich vom ersten Druck unterscheidet, **dadurch gekennzeichnet, dass** das Trennelement (20) von der ersten Einheit (11) und der zweiten Einheit (12) verschieden und unabhängig ist.

## Revendications

1. Procédé de fabrication d'un article en matériau composite, consistant à :
- fournir un produit semi-fini (2) comprenant au moins une couche de fibres noyées dans une matrice polymérique non réticulée ;
- positionner ledit produit semi-fini dans une première unité (11) d'un moule (10) ;
- positionner un élément séparateur (20) au-dessus dudit produit semi-fini (2) de manière à ce que ledit élément séparateur vienne en appui périphérique contre ladite première unité (11) dudit moule de manière à définir une première chambre (22) entre ledit élément séparateur (20) et ladite première unité (11), chambre dans laquelle est contenu ledit produit semi-fini,
- fermer ledit moule (10) au moyen d'une deuxième unité (12) dudit moule qui vient en appui périphérique contre ladite première unité (11) dudit moule ou contre ledit élément séparateur de manière à définir une deuxième chambre (23) entre ladite deuxième unité (12) et ledit élément séparateur (20),
- dépressuriser ladite première chambre (22),
- introduire du gaz dans ladite deuxième chambre (23) de manière à pousser ledit élément séparateur (20) contre ledit produit semi-fini (2) à une première pression prédéfinie,
- porter la température à l'intérieur de ladite première chambre (22) à une valeur prédéfinie afin de réticuler ladite matrice polymérique et d'obtenir ledit article,
dans lequel
une deuxième pression différente de ladite première pression est exercée sur au moins une région limitée (5) dudit produit semi-fini au moyen de ladite deuxième unité (12) dudit moule en contact direct avec ledit élément séparateur (20) de manière à soumettre différentes régions dudit produit semi-fini à des pressions différenciées,
**caractérisé en ce que** ledit élément séparateur (20) est distinct et indépendant de ladite première unité (11) et de ladite deuxième unité (12).

2. Procédé selon la revendication 1,
dans lequel ledit élément séparateur (20) est constitué d'un matériau souple, de préférence à base de silicone.

3. Procédé selon la revendication 1 ou la revendication 2,
dans lequel ladite première chambre (22) et/ou ladite deuxième chambre (23) sont fermées.

4. Procédé selon l'une des revendications précédentes,
dans lequel ladite deuxième pression est supérieure à ladite première pression.

5. Procédé selon l'une des revendications précédentes,
dans lequel ladite première pression est comprise entre 4 et 5 bars.

6. Procédé selon l'une des revendications précédentes,
dans lequel ladite deuxième pression est comprise entre 10 et 12 bars.

7. Procédé selon l'une des revendications précédentes,
dans lequel ledit produit semi-fini comprend un élément d'allègement (3) ayant une structure en nid d'abeille.

8. Procédé selon l'une des revendications précédentes,
dans lequel ladite deuxième pression est exercée sur une zone fortement incurvée (5) dudit produit semi-fini (2).

9. Procédé selon l'une des revendications précédentes,
dans lequel ledit article est une partie de siège à usage aéronautique ou automobile.

10. Dispositif (1) de fabrication d'un article en matériau composite, comprenant :
- une première unité (11) d'un moule (10) qui est agencée pour recevoir un produit semi-fini (2) dudit article, comprenant au moins une couche de fibres noyées dans une matrice polymérique non réticulée,
- une deuxième unité (12) dudit moule qui peut être déplacée depuis et vers ladite première unité (11) afin de fermer ledit produit semi-fini à l'intérieur dudit moule où ladite matrice polymérique est réticulée,
- un élément séparateur (20) qui peut être positionné au-dessus dudit produit semi-fini (2) dans une position disposée entre ladite première unité (11) et ladite deuxième unité (12) afin de définir entre elles une première chambre fermée (22) qui contient ledit produit semi-fini et une deuxième chambre fermée définie entre ledit élément séparateur et ladite deuxième unité,
- un dispositif de dépressurisation pour dépressuriser ladite première chambre,
- un dispositif de pressurisation pour pressuriser ladite deuxième chambre à une première pression,
- un dispositif de chauffage pour chauffer ladite première et/ou ladite deuxième unité de moule,
- une unité de commande pour le fonctionnement de l'appareil selon l'une des revendications précédentes,
dans lequel, lorsque ladite deuxième unité (12) dudit moule est fermée sur ladite première unité, elle entre en contact avec ledit élément séparateur et pousse sur ledit produit semi-fini à une pression différente de ladite première pression,
**caractérisé en ce que**
ledit élément séparateur (20) est distinct et indépendant de ladite première unité (11) et de ladite deuxième unité (12).
